# EUROPÄISCHE PATENTANMELDUNG

(11) **EP 3 015 658 A1**
(43) Veröffentlichungstag der Anmeldung: **04.05.2016**
(21) Anmeldenummer: 14190471.4
(22) Anmeldetag: 27.10.2014
(51) Int. Cl.: F01D 19/02, F02C 9/16

(54) **TURBINENREGELUNGSEINHEIT MIT EINEM TEMPERATURBEANSPRUCHUNGSREGLER ALS FÜHRUNGSREGLER**

(71) Anmelder: Siemens Aktiengesellschaft, 80333 München (DE)
(72) Erfinder: Bennauer, Martin, 46242 Bottrop (DE); Heue, Matthias, 44879 Bochum (DE); Ophey, Martin, 47638 Straelen (DE); Schindler, Christoph, 45219 Essen (DE)

(57) **Zusammenfassung**

Die Erfindung betrifft eine Turbinenregelungseinheit (1) zur Regelung einer Turbine (6, 8, 10), insbesondere zum Regeln des Anfahrens einer Turbine (6, 8, 10), ausgebildet als Kaskadenregler mit einem Führungsreger (2) und einem inneren Regler (3), wobei der Führungsregler ein Temperaturbeanspruchungsregler (2) für die Temperatur temperaturbeanspruchter Bauteile ist. Die Erfindung betrifft ebenso ein zugehöriges Verfahren.

## Beschreibung

Beim Anfahren von Turbinen, insbesondere von Dampfturbinen, ist zur Vermeidung von Bauteilbeschädigungen ein zu schneller Temperaturanstieg zu vermeiden. Daher werden die Temperaturen temperaturbelasteter Bauteile überwacht. Überschreiten die Temperaturen oder der Temperaturanstieg einen Sollwert, so wird auf einen Regler der Turbinenleistung eingewirkt die Leistungssteigerung zu stoppen. Dadurch ergeben sich mitunter Verzögerungen beim Anfahren der Turbine.

Aufgabe der Erfindung ist es diese Verzögerungen möglichst zu vermeiden, zumindest zu reduzieren und gleichzeitig eine Beschädigung von Bauteilen zu unterbinden. Diese Aufgabe wird insbesondere durch die unabhängigen Ansprüche gelöst. Die abhängigen Ansprüche geben vorteilhafte Weiterbildungen an.

Erfindungsgemäß wird eine Turbinenregelungseinheit zur Regelung einer Turbine, insbesondere zum Regeln des Anfahrens einer Turbine, vorgeschlagen, die als Kaskadenregler ausgebildet ist.

Wie fachüblich ist unter einem Kaskadenregler ein Regler verstanden, bei dem mindestens zwei Regelkreise ineinander geschaltet sind. Dabei ist ein äußerer Regelkreis, ein sogenannter Führungsregler vorhanden. Dieser hat die Aufgabe für einen inneren Regelkreis, also einen nachgeordneten Regelkreis, Sollwerte vorzugeben oder zumindest zu beeinflussen.

Vorliegend ist als Führungsregler ein Temperaturbeanspruchungsregler für die Temperatur temperaturbeanspruchter Bauteile vorhanden. Der Führungsregler hat also die Aufgabe, die Sollwerte für einen inneren Regelkreis so zu vorzugeben oder zu beeinflussen, dass eine überhöhte Temperaturbeanspruchung vermieden wird. Bisher wird beim Anfahren einer Turbine für gewöhnlich mit einem Regler für die Turbinenleistung die Leistung, genauer gesagt die Leistungssteigerung geregelt. Zur Vermeidung einer überhöhten Temperaturbeanspruchung wird die Temperatur gemessen und bei einer überhöhten Temperbeanspruchung das Anfahren gestoppt. Es wird also die Leistungssteigerung unterbrochen. Damit wird eine überhöhte Temperaturbeanspruchung von Bauteilen zwar vermieden, allerdings ist ein Zeitverlust in Kauf zu nehmen, bis die Turbine die gewünschte Leistung erreichen kann.

Wird hingegen wie erfindungsgemäß vorgesehen ein Temperaturbeanspruchungsregler für die Temperatur temperaturbeanspruchter Bauteile als Führungsregler vorgesehen, kann erreicht werden, dass die zulässige Temperaturbeanspruchung weitgehend ausgeschöpft wird, also etwa beim Anfahren die Leistungssteigerung der Turbine möglichst hoch gewählt wird, ohne die zulässige Temperaturbeanspruchung der Bauteile zu überschreiten. Es kann also die Leistung schneller erhöht werden und eine gewünschte Turbinenleistung schneller erreicht werden.

Neben dem als Führungsregler ausgebildeten Temperaturbeanspruchungsregler ist stets noch ein innerer Regler vorhanden. Der Temperaturbeanspruchungsregler übergibt an den inneren Regler einen geeigneten Sollwert um zu erreichen, dass die Turbine so geregelt wird, dass eine zulässige Temperaturbeanspruchung nicht überschritten wird.

Die Erfindung stellt vor allem auf Dampfturbinen ab, bei denen die Temperaturbeanspruchung, vor allem die Temperaturbeanspruchung beim Anfahren ein bedeutendes Problem darstellt. Es soll aber nicht ausgeschlossen werden, dass etwa auch in Gasturbinen die Erfindung zum Einsatz kommt.

Beim inneren Regler handelt es sich in einer wichtigen Ausführungsform um einen Turbinenregler, insbesondere um einen Regler der Turbinenleistung. Solche Turbinenregler sind im Stand der Technik bekannt und eignen sich sehr gut für das Regeln von Turbinen, insbesondere beim Anfahren der Turbine. Der Temperaturbeanspruchungsregler übergibt in diesem Fall an den inneren Regler einen Sollwert für die Leistung der Turbine. Wie später noch näher diskutiert werden wird, kann es sich dabei auch um einen Sollwert für die Leistungssteigerung handeln.

Der Hauptanwendungsfall ist sicherlich das Anfahren einer Turbine. Es ist aber auch denkbar etwa im Vollastbetrieb durch den als Führungsregler ausgebildeten Temperaturbeanspruchungsregler Überhitzungen zu vermeiden.

Zumeist ist eine Temperaturbeanspruchungsberechnungseinheit vorhanden, um dem Temperaturbeanspruchungsregler mindestens einen Sollwert vorzugeben. Die Temperaturbeanspruchungsberechnungseinheit berechnet, zumeist aus in Datenbanken hinterlegten Daten, ob eine Temperaturerhöhung zulässig ist.

In einer wichtigen Ausführungsform ist der Temperaturbeanspruchungsregler ausgebildet, für eine derartige Regelung der Turbine zu sorgen, dass ein gewünschter zeitlicher Temperaturanstieg, also ein bestimmter Temperaturanstieg pro Zeiteinheit nicht überschritten wird. Entscheidend, insbesondere beim Anfahren der Turbine, ist im Regelfall nicht eine absolute Temperatur nicht zu überschreiten. Dabei soll nicht verkannt werden, dass es selbstverständlich eine Temperatur gibt die nicht überschritten werden darf. Während des Anfahrens ist es aber zur Vermeidung von unzulässigen Materialbeanspruchungen entscheidend, dass die Temperatur nicht zu schnell ansteigt. Daher muss der Temperaturbeanspruchungsregler normalerweise dafür sorgen, dass die Temperatur nicht zu schnell ansteigt.

Zurückkommend auf die bereits erwähnte Temperaturbeanspruchungsberechnungseinheit bedeutet dies entsprechend, dass die Temperaturbeanspruchungsberechnungseinheit aus den erfassten Temperaturwerten und deren zeitlicher Abfolge auf einen Temperaturanstieg schließen kann. Weiterhin kann dieser Temperaturanstieg mit hinterlegten Daten verglichen werden. Dies erlaubt zu ermitteln, ob der Temperaturanstieg erhöht werden kann, abgesenkt werden muss oder gleichbleiben soll. Diese Information kann dem Temperaturbeanspruchungsregler übergeben werden. Aus dieser Information kann der Temperaturbeanspruchungsregler einen geeigneten Sollwert für den inneren Regler generieren.

In einer Ausführungsform ist der Temperaturbeanspruchungsregler ausgebildet eine Temperaturbeanspruchung zu vermeiden, die durch Temperaturdifferenzen hervorgerufen wird. Mitunter ergibt sich eine Temperaturbeanspruchung auch aus unterschiedlichen Temperaturen innerhalb eines Bauteils oder aus unterschiedlichen Temperaturen verschiedener Bauteile. So kann es etwa problematisch sein, wenn sich Schaufeln der Turbine durch Erwärmung ausdehnen und ein Gehäuse der Turbine aufgrund einer langsameren Erwärmung sich langsamer ausdehnt. Es gilt daher mitunter Temperaturdifferenzen, die eine Temperaturbeanspruchung auslösen, zu erkennen und durch eine Regelung zu vermeiden.

In einer Ausführungsform ist der Regler der Turbinenleistung ausgebildet Sollwerte zu generieren für Stellungsregler, welche die Stellung von Stellventilen regeln. Die Stellventile beeinflussen wesentlich die jeweils durchströmende Dampfmenge und damit die Leistung oder den leistungsverlauf der Turbine. Bei dieser Ausführungsform ist die Turbinenregelungseinheit also zweifach kaskadiert. Zunächst ist der Temperaturbeanspruchungsregler als übergeordneter Führungsregler vorhanden, der Sollwerte für den Regler der Turbinenleistung generiert. Der Regler der Turbinenleistung wiederum generiert Sollwerte für die Stellungsregler

In einer Ausführungsform ist die Turbinenregelungseinheit ausgebildet, Teilturbinen, insbesondere eine Hochdruckturbine, eine Mitteldruckturbine und eine Niederdruckturbine, getrennt zu regeln. Damit wird dem Umstand Rechnung getragen, dass vor allem aufgrund unterschiedlicher Temperaturbeanspruchungen die Leistung unterschiedlich gesteigert werden kann. Freilich wird sich zumeist eine völlig getrennte Regelung nicht realisieren lassen. Wenngleich verschiedene Dampfpfade zur Verfügung stehen, können sich aus der Randbedingung, dass Dampf aus der Hochdruckturbine in die Mitteldruckturbine und von dort in die Niederdruckturbine strömt, gewisse Abhängigkeiten der Leistungen der einzelnen Teilturbinen ergeben. Dennoch ist es vorteilhaft einzelne Teilturbinen grundsätzlich getrennt regeln zu können. Dies erlaubt etwa die Leistung einer Teilturbine schneller erhöhen zu können, während zur Vermeidung einer unerwünschten Temperaturbeanspruchung die Leistung einer anderen Teilturbine langsamer zu erhöhen ist.

In einer Ausführungsform sind an verschiedenen Stellen der Turbine, insbesondere an einer Hochdruckturbine und/oder an einer Mitteldruckturbine Temperatursensoren angebracht sind. Bei der Hochdruckturbine und bei der Mitteldruckturbine handelt es sich um stärker temperaturbeanspruchte Bauteile, so dass vor allem dort Temperatursensoren erforderlich sind. In vielen Fällen ist es freilich sinnvoll auch in der Niederdruckturbine Temperatursensoren anzubringen.

Die Erfindung betrifft auch ein Verfahren zur Regelung einer Turbine mit einem Kaskadenregler umfassend einen Führungsregler und einen inneren Regler, wobei der Führungsregler eine Temperaturbeanspruchung der Turbine erfasst und an den inneren Regler derartige Sollwerte übergibt, dass eine unerwünschte Temperaturbeanspruchung der Turbine vermieden wird. Auf weitere Erläuterungen des Verfahrens soll hier verzichtet werden. Es wird auf die Erläuterungen zur oben beschriebenen Turbinenregelungseinheit verwiesen, die zur Durchführung des Verfahrens verwendet werden kann.

In einer Ausführungsform des Verfahrens ist vorgesehen, dass der Führungsregler die Temperaturbeanspruchung der Turbine durch einen zeitlichen Temperaturanstieg, also durch einen Temperaturanstieg pro Zeiteinheit, erfasst und die daraus hervorgehende Temperaturbeanspruchung ermittelt, wobei bei einer zu hohen Temperaturbeanspruchung an den inneren Regler der Sollwert übergeben wird, den Leistungsanstieg der Turbine zu reduzieren, bei einer Temperaturbeanspruchung innerhalb eines gewünschten Bereichs der Sollwert übergeben wird, den Leistungsanstieg beibehalten zu können und bei einer Temperaturbeanspruchung unterhalb eines Schwellwerts der Sollwert übergeben wird, den Leistungsanstieg erhöhen zu können. Es ist klar, dass eine zu hohe Temperaturbeanspruchung hier nicht bedeuten muss, dass die Temperaturbeanspruchung bereits unzulässig hoch ist. Eine zu hohe Temperaturbeanspruchung bedeutet lediglich, dass ein Grenzwert für die Regelung überschritten ist. Durch die Regelung soll eine unzulässig hohe Temperaturbeanspruchung gerade vermieden werden. Diese Regelung erlaubt das schnelle Anfahren einer Turbine ohne eine unzulässig hohe Temperaturbeanspruchung.

Anhand einer Figur, die schematisch eine Turbinenregelungseinheit zeigt, sollen weitere Einzelheiten erläutert werden.

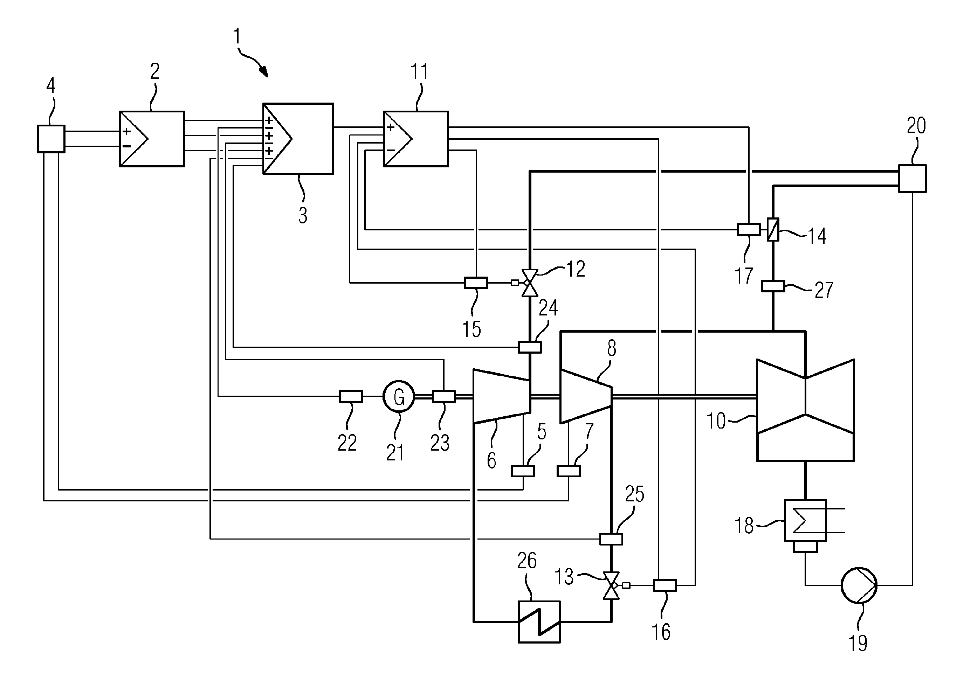

Zu erkennen ist eine Turbinenregelungseinheit 1. Ein Temperaturbeanspruchungsregler 2 dient als Führungsregler und übergibt Sollwerte an einen inneren Regler 3, der als Regler der Turbinenleistung ausgebildet ist. Dem Temperaturbeanspruchungsregler 2 ist eine Temperaturbeanspruchungsberechnungseinheit 4 vorgeschaltet. Diese wertet Signale aus, die von Temperatursensoren 5 für eine Hochdruckturbine 6 und von Temperatursensoren 7 für eine Mitteldruckturbine 8 stammen. Wenngleich in der Figur jeweils schematisch nur ein Temperatursensor dargestellt ist, so handelt es sich doch real sinnvollerweise um mehrere Temperatursensoren. Aus den Signalen der Temperatursensoren 5 und 7 ermittelt die Temperaturbeanspruchungsberechnungseinheit 4 mit Hilfe von hinterlegten Daten eine Temperaturbeanspruchung der Hockdruckturbine 6, der Mitteldruckturbine 8 und einer Niederdruckturbine 10. Dabei wird vor allem der zeitliche Temperaturanstieg betrachtet, der zur Vermeidung von zu hohen Temperaturbeanspruchungen nicht zu hoch sein darf.

Die Temperaturbeanspruchungsberechnungseinheit 4 übergibt an den Temperaturbeanspruchungsregler 2 ob die Temperaturbeanspruchung gesteigert werden kann, gleichbleiben soll oder sinken soll. Abhängig davon übergibt der Temperaturbeanspruchungsregler 2 an den Regler 3 der Turbinenleistung geeignete Sollwerte, abhängig davon ob ein Leistungsanstieg der Turbine gesenkt, erhöht oder konstant gehalten werden soll. Dies erfolgt für die Hockdruckturbine 6, die Mitteldruckturbine 8 und die Niederdruckturbine 10 jeweils getrennt.

Der Regler 3 der Turbinenleistung übergibt entsprechende Sollwerte an einen Stellungsregler 11. Der Stellungsregler 11 regelt auf der Basis der übergebenen Sollwerte eine Stellung eines Frischdampfstellventils 12, welches Dampfzufuhr zur Hockdruckturbine 6 beeinflusst, eine Stellung eines Abfangstellventils 13, welches Dampfzufuhr zur Mitteldruckturbine 8 beeinflusst und eine Stellung einer Zudampfklappe 14, welche Dampfzufuhr zur Niederdruckturbine 10 beeinflusst.

Am Frischdampfstellventil 12 befindet sich ein Stellungsmesser 15, am Abfangstellventil 13 ein Stellungsmesser 16, und an der Zudampfklappe 14 ein Stellungsmesser 17. Die Stellungsmesser 15, 16 und 17 übergeben Werte an den Stellungsregler 11. Damit hat der Stellungsregler 11 die Information, ob die Stellung von Frischdampfstellventil 11, Abfangstellventil 13 und Zudampfklappe 14 den jeweils gewünschten Wert eingenommen hat oder ein Öffnen oder Schließen erforderlich ist.

An dieser Stelle soll kurz auf einen vereinfachten Dampfkreislauf eingegangen werden. Aus der Niederdruckturbine 10 kommender Nassdampf wird in einem Kondensator 18 kondensiert. Das dabei entstehende Wasser wird mit einer Speisewasserpumpe 19 in einen Dampferzeuger 20 geführt. Von dort gelangt der Dampf durch das Frischdampfstellventil 12 zur Hochdruckturbine 6. Aus der Hockdruckturbine kommender Dampf wird in einem Zwischenüberhitzer 26 erhitzt. Aus dem Zwischenüberhitzer 26 strömt der Dampf durch das Abfangstellventil 13 in die Mitteldruckturbine 8. Nach Entspannung in der Mitteldruckturbine 8 strömt der Dampf in Niederdruckturbine 10. Dabei kann je nach Öffnungsgrad der Zudampfklappe 14 vom Dampferzeuger 20 kommender Dampf zugegeben werden.

Die Hockdruckturbine 6, die Mitteldruckturbine 8 und die Niederdruckturbine 10 treiben gemeinsam einen Generator 21 an. Dessen Leistung wird mit einem Leistungsmesser 22 ermittelt und an den Regler 3 der Turbinenleistung übergeben. Ferner ist ein Drehzahlmesser 23 vorgesehen, der den Regler 3 der Turbinenleistung mit der Drehzahl von Turbine und Generator 21 versorgt.

In Strömungsrichtung nach dem Frischdampfstellventil 12 befindet sich ein Druckmesser 24, nach dem Abfangstellventil 13 ein Druckmesser 25 und nach der Zudampfklappe 14 ein Druckmesser 27. Die jeweils erfassten Druckwerte werden an den Regler 3 der Turbinenleistung übergeben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Turbinenregelungseinheit (1) zur Regelung einer Turbine (6, 8, 10),
insbesondere zum Regeln des Anfahrens einer Turbine (6, 8, 10),
ausgebildet als Kaskadenregler mit einem Führungsreger (2) und einem inneren Regler (3),
wobei der Führungsregler ein Temperaturbeanspruchungsregler (2) für die Temperatur temperaturbeanspruchter Bauteile ist.

2. Turbinenregelungseinheit nach Anspruch 1,
**dadurch gekennzeichnet, dass**
als innerer Regler ein Turbinenregler, insbesondere ein Regler (3) der Turbinenleistung vorhanden ist.

3. Turbinenregelungseinheit nach einem der vorhergehenden Ansprüche,
**dadurch gekennzeichnet, dass**
eine Temperaturbeanspruchungsberechnungseinheit (4) vorhanden ist, um dem Temperaturbeanspruchungsregler (2) mindestens einen Sollwert vorzugeben.

4. Turbinenregelungseinheit nach einem der vorhergehenden Ansprüche,
**dadurch gekennzeichnet, dass**
der Temperaturbeanspruchungsregler (2) ausgebildet ist, für eine derartige Regelung der Turbine (6, 8, 10) zu sorgen, dass ein gewünschter zeitlicher Temperaturanstieg nicht überschritten wird.

5. Turbinenregelungseinheit nach einem der vorhergehenden Ansprüche,
**dadurch gekennzeichnet, dass**
der Temperaturbeanspruchungsregler (2) ausgebildet ist eine Temperaturbeanspruchung zu vermeiden, die durch Temperaturdifferenzen hervorgerufen wird.

6. Turbinenregelungseinheit nach einem der Ansprüche 2 bis 5,
**dadurch gekennzeichnet, dass**
der Regler (3) der Turbinenleistung ausgebildet ist Sollwerte zu generieren für Stellungsregler (11), welche die Stellung von Stellventilen (12, 13, 14) regeln können.

7. Turbinenregelungseinheit nach einem der vorhergehenden Ansprüche,
**dadurch gekennzeichnet, dass**
die Turbinenregelungseinheit (1)ausgebildet ist, Teilturbinen, insbesondere eine Hochdruckturbine (6), eine Mitteldruckturbine (8) und eine Niederdruckturbine 10), getrennt zu regeln.

8. Turbinenregelungseinheit nach einem der vorhergehenden Ansprüche,
**dadurch gekennzeichnet, dass**
an verschiedenen Stellen der Turbine (6, 8, 10), insbesondere an einer Hochdruckturbine (6) und/oder an einer Mitteldruckturbine (8) Temperatursensoren (5, 7) angebracht sind.

9. Verfahren zur Regelung einer Turbine (6, 8, 10) mit einem Kaskadenregler umfassend einen Führungsregler (2) und einen inneren Regler (3),
wobei der Führungsregler eine Temperaturbeanspruchung der Turbine (6, 8, 10) erfasst und an den inneren Regler (3) derartige Sollwerte übergibt, dass eine unerwünschte Temperaturbeanspruchung der Turbine (6, 8, 10) vermieden wird.

10. Verfahren nach dem vorhergehenden Anspruch,
**dadurch gekennzeichnet, dass**
der Führungsregler (3) die Temperaturbeanspruchung der Turbine (6, 8, 10) durch einen zeitlichen Temperaturanstieg erfasst und die daraus hervorgehende Temperaturbeanspruchung ermittelt,
wobei bei einer zu hohen Temperaturbeanspruchung an den inneren Regler (3) der Sollwert übergeben wird, den Leistungsanstieg der Turbine (6, 8, 10) zu reduzieren, bei einer Temperaturbeanspruchung innerhalb eines gewünschten Bereichs der Sollwert übergeben wird, den Leistungsanstieg beibehalten zu können und bei einer Temperaturbeanspruchung unterhalb eines Schwellwerts der Sollwert übergeben wird, den Leistungsanstieg erhöhen zu können.
